# EUROPÄISCHE PATENTSCHRIFT

(11) **EP 2 025 026 B1**
(45) Veröffentlichungstag und Bekanntmachung des Hinweises auf die Patenterteilung: **29.12.2010**
(21) Anmeldenummer: 07724870.6
(22) Anmeldetag: 04.05.2007
(51) Int. Cl.: H01M 8/02, H01M 8/04

(54) **BRENNSTOFFZELLE MIT EINER SEPARATORPLATTENEINHEIT UND SEPARATORPLATTENEINHEIT**
FUEL CELL WITH A SEPARATOR PLATE UNIT, AND A SEPARATOR PLATE UNIT
PILE A COMBUSTIBLE MUNIE D'UN ENSEMBLE DE PLAQUES SEPARATRICES ET ENSEMBLE DE PLAQUES SEPARATRICES

(30) Priorität: 08.06.2006 DE 102006027034
(43) Veröffentlichungstag der Anmeldung: 18.02.2009
(73) Patentinhaber: DaimlerChrysler AG, 70327 Stuttgart (DE)
(72) Erfinder: BLANK, Felix, 78465 Konstanz (DE)
(74) Vertreter: JENSEN & SON
(86) Internationale Anmeldenummer: PCT/EP2007/003945
(87) Internationale Veröffentlichungsnummer: WO 2007/140849

(56) Entgegenhaltungen:
- EP-A- 1 333 515
- WO-A-2004/025763
- WO-A-2007/017115
- DE-A1- 10 346 594
- US-A1- 2003 039 876

## Beschreibung

Die Erfindung betrifft eine Brennstoffzelle mit einer Separatorplatteneinheit und Separatorplatteneinheit gemäß den Oberbegriffen der unabhängigen Ansprüche.

Der prinzipielle Aufbau einer Polymer-Elektrolyt-Membran-Brennstoffzelle (PEM-Brennstoffzelle) ist bekannt. Die PEM-Brennstoffzelle enthält eine Membran-Elektroden-Anordnung (MEA), die aus einer Anode, einer Kathode und einer dazwischen angeordneten Polymer-Elektrolyt-Membran (PEM) aufgebaut ist. Die MEA ist ihrerseits wiederum zwischen zwei Separatorplatteneinheiten angeordnet, wobei eine über der Anode angeordnete Separatorplatteneinheit Kanäle für die Verteilung von Brennstoff, z.B. Wasserstoffgas, ein wasserstoffreiches Reformatgas oder dergleichen, und eine über der Kathode angeordnete Separatorplatteneinheit Kanäle für die Verteilung von Oxidationsmittel, z.B. Luft, aufweist, wobei diese Kanäle der MEA zugewandt sind. Derartige Kanäle werden im Folgenden auch Verteilungskanäle genannt. Die Verteilungskanäle bilden den so genannten Anoden- bzw. Kathodenraum. Die Elektroden, Anode und Kathode, sind im Allgemeinen als so genannte Gasdiffusionselektroden (GDE) ausgebildet. Diese haben die Funktion, den bei der elektrochemischen Brennstoffzellenreaktion (z.B. 2 H₂ + O₂ → 2 H₂O) erzeugten elektrischen Strom abzuleiten und die Reaktionsstoffe (letztlich Wasserstoff und Sauerstoff), Edukte und Produkte, hindurch diffundieren zu lassen. Eine GDE umfasst im Allgemeinen wenigstens eine Gasdiffusionsschicht bzw. Gasdiffusionslage (GDL) und eine Katalysatorschicht, die der PEM zugewandt ist und an der die Brennstoffzellenreaktion stattfindet. Eine derartige Brennstoffzelle kann bei relativ geringen Betriebstemperaturen elektrischen Strom mit hoher Leistung erzeugen. Reale Brennstoffzellen sind meist zu so genannten Brennstoffzellenstapeln (Stacks) gestapelt, um eine hohe Leistungsabgabe zu erzielen, wobei anstelle der monopolaren Separatorplatten bipolare Separatorplatten (Bipolarplatten) eingesetzt werden und monopolare Separatorplatten nur als Endplatten des Stacks eingesetzt sind. Die Separatorplatten können aus zwei oder mehr Teilplatten bestehen, die eine Einheit bilden und die deswegen Separatorplatteneinheiten genannt werden. Unter dem Begriff Separatorplatteneinheit sollen im Folgenden alle vorgenannten Platten und Platteneinheiten verstanden werden. Eine Separatorplatteneinheit kann demnach eine einzige Platte umfassen oder aus zwei oder mehr Teilplatten zusammengefügt sein, beispielsweise einer Anodenplatte und einer Kathodenplatte.

Bestimmte gängige PEMs benötigen einen gewissen Wassergehalt, um eine ausreichende Ionenleitfähigkeit aufzuweisen. Dies trifft insbesondere auf PEMs zu, die aus auf fluorierten Sulfonsäuren basierende Materialien bestehen, wie z.B. Nafion. Derartige PEMs werden daher in der Regel befeuchtet, indem die Reaktionsstoffe befeuchtet werden, bevor sie einer PEMFC zugeführt werden. Der Nachteil der Befeuchtung besteht in dem damit verbundenen Aufwand und den zusätzlich erforderlichen Einrichtungen, wie etwa einem Befeuchter, was das Betriebsverfahren verkompliziert und einer möglichst kompakten Bauart für ein Brennstoffzellensystem entgegensteht.

Ein weiterer Nachteil der Befeuchtung besteht darin, dass ein Befeuchtungsgrad schwierig einzustellen ist. Befeuchtet man nämlich zu wenig oder gar nicht und vertraut darauf, dass das bei der Brennstoffzellenreaktion entstehende Produktwasser genügt, um die PEM ausreichend zu befeuchten, so ergibt sich insbesondere auf der Seite der Kathode das Problem, dass in der Nähe des Oxidationsmittel-Eingangsports für Wasser die Tendenz zu verdampfen besteht, weil das Oxidationsmittel dort verhältnismäßig trocken ist, sodass die PEM besonders in diesem Bereich zur Austrocknung neigt. Beim Austrocknen kann dann nicht nur die Ionenleitfähigkeit verloren gehen, sondern die PEM kann auch mechanisch beschädigt werden, z.B. durch Risse.

Beim Strömen durch die Kanäle der Separatorplatteneinheit absorbiert das Oxidationsmittel dann Produktwasser von der MEA, wodurch dessen relative Feuchte zunimmt und sich das Befeuchtungsproblem zunehmend verringert, bis es schließlich verschwindet oder unter ungünstigen Umständen sogar in das gegenteilige Problem, einem Wasserabtransportproblem, umschlägt.

Das Wasserabtransportproblem besteht darin, dass das Oxidationsmittel auf dem weiteren Weg vom Eingangsport zum Ausgangsport infolge der Aufnahme von Produktwasser zunehmend feuchter wird und dadurch immer weniger Produktwasser aufnehmen und damit abtransportieren kann, sodass sich am Ausgangsport oder in dessen Nähe sogar die Situation ergeben kann, dass das Produktwasser nicht ausreichend abgeführt wird. Das Produktwasser kondensiert dann unter ungünstigen Umständen und verstopft z.B. wichtige Pfade für den An- und Abtransport der Reaktionsstoffe zu und von den reaktiven Zentren, wodurch die Brennstoffzellenreaktion beeinträchtigt wird und die Leistung der Brennstoffzelle sinkt.

Das Wasserabtransportproblem kann insbesondere dann auftreten, wenn das Oxidationsmittel vor Eintritt in eine Brennstoffzelle befeuchtet wird. Durch die Befeuchtung ist die MEA dann im Bereich des Oxidationsmittel-Eingangsports zwar feucht genug, um eine Austrocknung der PEM zu verhindern, allerdings kann das Oxidationsmittel dann von Anfang an weniger Produktwasser aufnehmen, sodass die Feuchte des Oxidationsmittels schnell zu hoch ist, um Produktwasser ausreichend aufzunehmen und abzuführen. Die Brennstoffzellenreaktion kann dadurch leicht beeinträchtigt werden.

Bei herkömmlichen Brennstoffzellen mit befeuchtungsabhängigen PEMs muss daher im Allgemeinen ein Kompromiss zwischen ausreichender Befeuchtung am Kathodeneingang und ausreichendem Wasserabtransport am Kathodenausgang gefunden werden.

Zur Lösung des Befeuchtungsproblems wird in der DE 103 46 594 A1 eine Brennstoffzelle beschrieben, die zwei Fluidräume aufweist, d.h. einen Anoden- und einen Kathodenraum, wobei in einem der Fluidräume durch eine Trennwand ein weiterer Fluidraum abgetrennt ist, der als Zudosierungsraum für ein Fluid, z.B. Oxidationsmittel, dienen soll. Die Trennwand weist Bohrungen auf, durch die der Zudosierungsraum mit dem Kathodenraum fluidisch verbunden ist, sodass ein im Zudosierungsraum strömendes Fluid (das Oxidationsmittel) durch die Zudosierungsstellen bildenden Bohrungen hindurch in den Kathodenraum gelangen und so in den Kathodenraum injiziert bzw. zudosiert werden kann. Mit Hilfe des Zudosierungsraums kann die Zuführung des Oxidationsmittels zum Kathodenraum auf einen größeren Bereich räumlich verteilt und dadurch aufgelockert werden. Dadurch strömt nicht das komplette Volumen des für die Brennstoffzellenreaktion erforderlichen Oxidationsmittels über den besonders austrocknungsanfälligen Teil der PEM im Bereich des Eingangsbereichs der Kathode, sondern im optimalen Fall nur soviel, wie in diesem Bereich elektrochemisch umgesetzt werden kann. Da anfangs nur wenig Oxidationsmittel zudosiert wird, wird auch nur wenig Wasser zur Befeuchtung der PEM benötigt, und zwar im optimalen Fall weniger, als in diesem Bereich infolge der Brennstoffzellenreaktion entsteht. Stromabwärts, vor einer weiteren Zudosierungsstelle, ist das Oxidationsmittel dann infolge des bei der Brennstoffzellenreaktion entstehenden Wassers bereits teilweise befeuchtet, sodass die Zudosierung von trockenem Oxidationsmittel noch unschädlicher ist als bei der vorangegangenen Zudosierung. Dieser Trend setzt sich bei nachfolgenden Zudosierungen weiter fort, sodass in Summe für die Brennstoffzelle kaum oder sogar nicht befeuchtetes Oxidationsmittel eingesetzt werden kann, ohne dass deren PEM oder ihre Funktion dabei infolge Austrocknung Schaden nimmt. Dadurch kann im optimalen Fall auch auf die bislang für PEM-Brennstoffzellensysteme erforderlichen Befeuchtungs- und Wasserrückgewinnungs-Einrichtungen verzichtet werden, was eine erhebliche Vereinfachung derartiger PEM-Brennstoffzellensysteme darstellt.

Damit gibt DE 103 46 594 A1 zwar einen prinzipiellen Weg für die Lösung des Befeuchtungsproblems an, es besteht jedoch weiterer Verbesserungsbedarf, z.B. um eine exakte Zudosierung der richtigen Mengen an Oxidationsmittel an der richtigen Stelle zu bewirken ohne eine aufwendige Regelungseinrichtung dafür einsetzen zu müssen.

Die Aufgabe der vorliegenden Erfindung besteht daher darin, eine Brennstoffzelle der vorstehend beschriebenen Art dahingehend weiter zu entwickeln, dass die Zudosierung von nicht- oder wenig befeuchtetem Fluid, insbesondere Oxidationsmittel, in den betreffenden Fluidraum mit Blick auf den Verlauf der relativen Feuchte entlang des Fluidraums auf einfache Weise weiter verbessert werden kann. Ferner soll eine entsprechende Separatorplatteneinheit geschaffen werden.

Die Aufgabe wird durch die Merkmale der unabhängigen Ansprüche gelöst. Bevorzugte Ausführungsformen sind in den Unteransprüchen angegeben.

Die erfindungsgemäße Brennstoffzelle weist eine zwischen zwei Separatorplatteneinheiten angeordneten Membran-Elektroden-Anordnung auf, sowie zur Verteilung eines ersten Fluids einen ersten Fluidraum, der an eine Seite der Membran-Elektroden-Anordnung angrenzt, und zur Verteilung eines zweiten Fluids einen zweiten Fluidraum, der eine dieser Seite gegenüberliegenden Seite der Membran-Elektroden-Anordnung angrenzt, wobei in wenigstens einem Fluidraum eine Trennwand angeordnet ist, die den Fluidraum in zumindest einen Zudosierungsraum und einen Fluidteilraum unterteilt, wobei der zumindest eine Zudosierungsraum an wenigstens einer Zudosierungsstelle eine fluidische Verbindung zu dem angrenzenden Fluidteilraum aufweist, sodass das erste Fluid aus dem Zudosierungsraum durch die Zudosierungsstelle hindurch in den angrenzenden Fluidteilraum zudosierbar ist. Die Brennstoffzelle zeichnet sich dadurch aus, dass ausgehend von einem randseitigen Eingang des ersten Fluids in den Fluidraum ein Querschnitt des Fluidteilraums in Strömungsrichtung des ersten Fluids zu einem Ausgang des Fluids aus dem Fluidraum zunimmt. Damit kann auf einfache Weise entlang des Strömungswegs des Fluids, insbesondere des Oxidationsmittels, dessen relative Feuchte homogenisiert werden. Für den bevorzugten Fall, dass der Fluidraum ein Kathodenraum ist und das Fluid ein Oxidationsmittel, zeigt sich der Vorteil, dass am Eingangsbereich des Oxidationsmittels nur eine geringe Gasmenge zur Verfügung steht, die entlang der Strömungsrichtung zum Ausgang aus dem Fluidraum bzw. Kathodenraum vorzugsweise stetig zunimmt. Ein Austrocknen der Membran-Elektrodeneinheit am Eingangsbereich für das Oxidationsmittel im Kathodenraum kann wirksam verhindert werden.

Vorteilhaft kann ein Querschnitt des Zudosierungsraums gegenläufig zu dem Fluidteilraum abnehmen. Daraus ergibt sich insgesamt eine Separatorplatteneinheit mit gleichmäßiger Dicke.

Der Querschnitt des Fluidteilraums kann abhängig von einem Fluidbedarf, insbesondere Sauerstoffbedarf der Membran-Elektroden-Anordnung und/oder abhängig von einer gewünschten relativen Feuchte des Fluids im Fluidteilraum bzw. des Oxidationsmittels im Kathodenteilraum, eingestellt sein. Bevorzugt sind die Verhältnisse so gewählt, dass einerseits der Kathodenseite der Membran-Elektrodeneinheit genügend Sauerstoff für die Brennstoffzellenreaktion zur Verfügung steht und andererseits die Menge des Oxidationsmittels jeweils so gering ist, das sich durch das Produktwasser schnell eine hohe relative Feuchte einstellt. Die relative Feuchte wird dabei wenigstens im Bereich nahe den Zudosierungsstellen zweckmäßigerweise unterhalb der Sättigungsgrenze gehalten.

Denkbar ist auch eine entsprechende Ausgestaltung auf der Anodenseite, d.h. im Anodenraum der Brennstoffzelle.

Eine einfache Geometrie ergibt sich, wenn die Trennwand schräg zur Membran-Elektroden-Anordnung angeordnet ist. Die Membran-Elektroden-Anordnung weist typischerweise eine plattenförmige Gestalt mit geringer Dicke auf.

Die Trennwand kann entlang ihrer vom Eingangsport des ersten Fluids, insbesondere des Oxidationsmittels, ausgehenden Längserstreckung eine Mehrzahl von Bohrungen bzw. Löchern aufweisen, durch weiche das Oxidationsmittel vom Zudosierungsraum in den Fluidraum, bzw. Kathodenraum, eintritt.

Wo entlang der Längserstreckung der Trennwand die Bohrungen vorteilhaft angeordnet werden sollten, hängt von den Betriebsparametern (Druck, Temperatur, Befeuchtung, Stöchiometrie usw.) ab. So kann es sein, dass die Bohrungen bei bestimmten Betriebsparametern mit Vorteil auf etwa dem ersten Drittel der Längserstreckung angeordnet werden sollten. Unter anderen Betriebsbedingungen (hohe Temperatur, geringe oder keine Befeuchtung, geringerer Druck) kann es vorteilhaft sein, die Bohrungen entlang der ganzen Längserstreckung anzuordnen. Dabei gilt es allerdings zu beachten, dass die Wirkung der Zudosierung am Ende der Längserstreckung nur noch sehr klein ist, da schon ein großes Gasvolumen vorhanden ist. Ferner ist es vorteilhaft, die Abstände zwischen den Bohrungen in Richtung vom Eingangsport zum Ausgangsport zu vergrößern. Daraus ergeben sich ausgangsnah größere Abstände zwischen den Bohrungen als eingangsnah, was die Wirkung der Zudosierung am Ende der Längserstreckung weiter verkleinert

Die Trennwand kann als dünne Folie ausgebildet sein, die bevorzugt metallisch ist. Die Trennwand lässt sich durch einfache Stanzprozesse schnell und in großen Stückzahlen und Abmessungen fertigen. Dies ist besonders in Serienprozessen für Kraftfahrzeuganwendungen vorteilhaft, in denen üblicherweise kurze Taktzeiten erwünscht sind und große Mengen an Komponenten bereitgestellt werden müssen.

Der kathodennahe Kathodenteilraum zur Gasverteilung ist mit einem porösen Material gefüllt. Das poröse Material kann beispielsweise ein Metallschaum oder ein zusammengesintertes Granulat oder dergleichen sein. Diese Materialien sind leicht herzustellen und lassen sich zudem leicht in die notwendige Keilform bringen.

Ist der Zudosierungsraum ebenfalls mit einem porösen Material gefüllt, können Gleichteile für beide Räume verwendet werden. Die Keile werden lediglich mit gegenläufiger Steigung aufeinander gelegt und ergeben dann den gewünschten rechtwinkligen Block. Die Trennwand kann einfach dazwischen gelegt werden.

Dabei können eine metallische Verbindung zwischen den einzelnen Teilen und/oder eine spezielle Oberflächenbeschichtung der einzelnen Teile zur Reduzierung der elektrischen Übergangswiderstände vorteilhaft sein.

Die Porosität des Materials ermöglicht den Verzicht auf aufwändige Kanalstrukturen in den Separatorplatteneinheiten, die sonst zum Gastransport des Brennstoffs und des Oxidationsmittels notwendig sind. Für derartige Kanäle gelen sehr enge Fertigungstoleranzen, was eine entsprechend teure Fertigung bedeutet. Weiterhin ist durch die poröse Struktur eine feine Verteilung der Kontaktflächen zur Membran-Elektroden-Anordnung möglich. Dies erweist sich als vorteilhaft bei der Gasversorgung in die Gasdiffusionslage und beim Abtransport des Wassers aus der Gasdiffusionslage. Es kann sogar die Dicke der Gasdiffusionselektrode reduziert werden. Da bei üblichen Stacks mehrere hundert einzelne Brennstoffzellen aufeinander gestapelt sind, ist eine Reduktion der Dicke der einzelnen Komponenten insgesamt sehr günstig für die Baugröße des Stacks. Bei reduzierter Dicke der Gasdiffusionselektroden können diese stärker hydrophobiert werden als bei größerer Dicke, was wiederum günstig für ein verbessertes Wasserrückhaltevermögen der Membran-Elektroden-Anordnung ist. Besonders vorteilhaft ist die Ausgestaltung, wenn eine Trennwand im Kathodenraum vorgesehen ist und der Anodenraum trennwandfrei ausgebildet, aber mit porösem Material gefüllt ist.

Die erfindungsgemäße Separatorplatteneinheit zeichnet sich dadurch aus, dass ausgehend von einem randseitigen Eingangsport des Fluids in den Fluidraum ein Querschnitt des Fluidteilraums in Strömungsrichtung des Fluids zu einem Ausgangsport hin zunimmt.

Vorteilhaft nimmt ein Querschnitt des Zudosierungsraums in Strömungsrichtung des Fluids ab. Dadurch ergibt sich eine konstante Dicke der Separatorplatteneinheit.

Bevorzugt kann der Fluidteilraum mit einem porösen elektrisch leitenden Material gefüllt sein. Eine aufwändige Kanalstruktur mit engen Toleranzen kann vermieden werden. Eine Gasverteilung erfolgt in vorteilhafter Weise durch das poröse Material.

Vorteilhaft kann auch der Zudosierungsraum mit einem porösen elektrisch leitenden Material gefüllt sein.

Der Fluidraum ist vorzugsweise ein Kathodenraum und das Fluid ein Oxidationsmittel. Zusätzlich kann jedoch auch der Anodenraum in der angegebenen Weise ausgebildet sein. Vorteilhaft ist, wenn der Anodenraum wenigstens ebenfalls mit porösem elektrisch leitenden Material gefüllt ist, welches die Kanalstrukturen der Verteilungskanäle ersetzt, selbst wenn im Anodenraum keine Trennwand vorgesehen sein sollte.

Die erfindungsgemäßen Gegenstände können beispielsweise im Bereich der Erzeugung von elektrischem Strom für die Traktion und/oder Bordnetzversorgung von Fahrzeugen gewerblich eingesetzt werden.

Die Erfindung wird nachfolgend genauer erklärt. Dazu sind in den Figuren konkrete Ausführungsbeispiele der Erfindung vereinfacht dargestellt und in der nachfolgenden Beschreibung näher erläutert.

Dabei zeigen:
- Fig. 1: schematisch eine einzelne Brennstoffzelle mit Membran-Elektroden-Einheit, an die beidseits jeweils ein Gasraum einer Separatorplatteneinheit angrenzt;
- Fig. 2: eine bevorzugte Trennwand; und
- Fig. 3: einen Verlauf einer relativen Feuchte eines Oxidationsmittels in dessen Strömungsrichtung in einer erfindungsgemäßen Brennstoffzelle.

In den Figuren sind funktionell gleichartige Elemente mit gleichen Bezugszeichen beziffert.

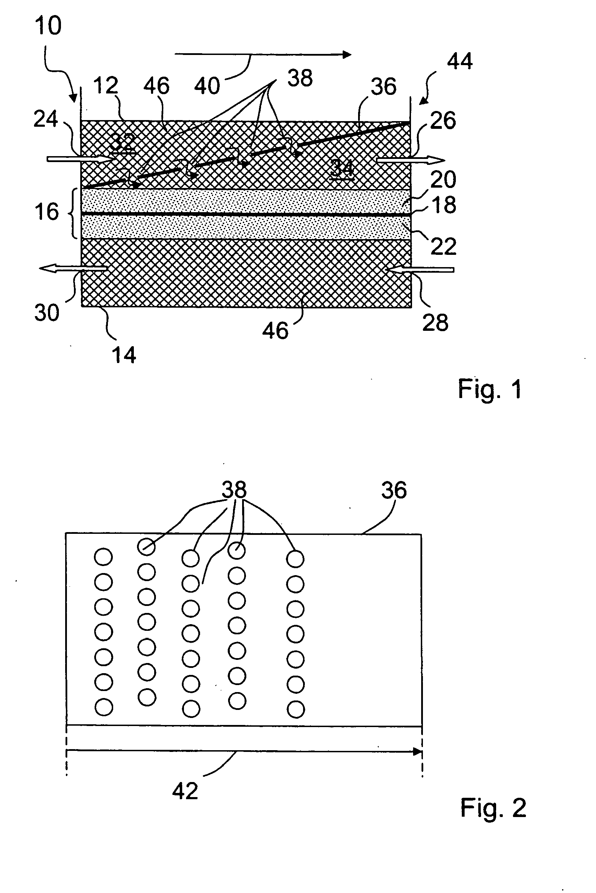

Fig. 1 zeigt in schematischer Darstellung einen Schnitt durch eine einzelne Brennstoffzelle 10. In üblichen Stacks, wie sie beispielsweise in Fahrzeugen zur Traktion oder zur Bordnetzversorgung eingesetzt werden, ist eine Vielzahl solcher Brennstoffzellen 10 zu einem Stack in Richtung ihrer Flächennormalen aufeinander gestapelt.

Die Brennstoffzelle 10 weist eine Membran-Elektroden-Anordnung 16 auf, bei der an eine ionenleitende Polymermembran 18 beidseits je eine Gasdiffusionselektrode 20, 22 angrenzt. Kathodenseitig an die Membran-Elektroden-Anordnung 16 angrenzend folgt als erster Fluidraum 12 ein Kathodenraum mit einem Oxidationsmittel als erstem Fluid, das über einen Eingangsport 24 dem Fluidraum 12 zugeführt und über einen Ausgangsport 26 wieder abgeführt wird. Anodenseitig angrenzend ist als zweiter Fluidraum 14 ein Anodenraum gebildet, mit einem wasserstoffreichen Brennstoff als zweitem Fluid, das über einen Eingangsport 28 zugeführt und einen Ausgangsport 30 aus dem Fluidraum 14 abgeführt wird. Die Fluidräume 12, 14 sind Bestandteile ihrer jeweiligen Separatorplatteneinheiten 44. Die Strömungsrichtung des zweiten Fluids (Reduktionsmittel) ist durch Pfeile nach links angedeutet. Die sich aus der Lage von Eingangsport 24 und Ausgangsport 26 ergebende Strömungsrichtung 40 des oxidierenden Fluids (Oxidationsmittel) ist durch nach rechts weisende Pfeile angedeutet. Oxidationsmittel und Reduktionsmittel strömen in diesem Beispiel gegenläufig an der Membran-Elektroden-Anordnung 16 vorbei.

An dieser Stelle sei erwähnt, dass Separatorplatteneinheiten 44, insbesondere wenn sie als Bipolarplatten für einen Stackaufbau ausgebildet sind, üblicherweise jeweils eine Anodenplatte und eine Kathodenplatte aufweisen, die elektrisch leitend miteinander verbunden sind. Die elektrisch leitende Verbindung kann beispielsweise mit Hilfe einer zwischen Anodenplatte und Kathodenplatte angeordneten Metallfolie bewirkt werden

Innerhalb des als Kathodenraum ausgebildeten ersten Fluidraums 12 ist eine Trennwand 36 angeordnet, die den Fluidraum 12 in einen kathodenfernen Zudosierungsraum 32 und einen kathodennahen Fluidteilraum 34 unterteilt. Die Trennwand 36 ist schräg zur Membran-Elektroden-Anordnung 16 angeordnet. Vorzugsweise liegt der Winkel zwischen der Membran-Elektroden-Anordnung 16 und der Trennwand 36 zwischen 5° und 80°. Die Dicke der Trennwand 36 liegt bei Fahrzeuganwendungen vorzugsweise im Bereich von 0,5 bis 4 mm und ihre Breite vorzugsweise im Bereich von 200 bis 1000 mm. Vorzugsweise ist die Trennwand 36 als dünne metallische Folie ausgebildet.

Der Zudosierungsraum 32 weist mehrere Zudosierungsstellen 38 als fluidische Verbindung zu dem angrenzenden kathodennahen Fluidteilraum 34 auf, sodass Oxidationsmittel (erstes Fluid) aus dem Zudosierungsraum 32 durch die Zudosierungsstellen 38 hindurch in den angrenzenden als Kathodenteilraum ausgebildeten Fluidteilraum 34 zudosierbar ist, was durch kleine Pfeile vom Zudosierungsraum 32 in den Fluidteilraum 34 angedeutet ist.

Ausgehend von einem randseitigen Eingangsport 24 für das Oxidationsmittel in den als Kathodenraum ausgebildeten Fluidraum 12 nimmt der Querschnitt des kathodennahen Kathodenraums 34 in Strömungsrichtung 40 des Oxidationsmittels zu dem Ausgangsport 26 hin zu, während der Querschnitt des Zudosierungsraums 32 gegenläufig zu dem als kathodennaher Kathodenraum ausgebildeten Fluidraum 34 abnimmt.

Insgesamt ergibt sich damit vorteilhafterweise eine gleichmäßige Dicke des der Separatorplatteneinheit 44 zugeordneten Kathodenraums. Im Fall, dass die Separatorplatteneinheit 44 keine gleichmäßige Dicke aufweist, ist es vorteilhaft, in einem Stack zwei gleichartige Separatorplatteneinheiten 44 so anzuordnen, dass sich für die Anordnung insgesamt eine gleichmäßige Dicke ergibt.

Der Fluidraum 12 ist mit einem porösen metallischen Material 46 gefüllt, welches die üblichen Gasverteilungskanäle ersetzt. Der Querschnitt des kathodennahen Fluidteilraums 34 ist vorzugsweise abhängig von einem Sauerstoffbedarf der Membran-Elektroden-Anordnung 16 und/oder abhängig von einer gewünschten relativen Feuchte des Oxidationsmittels im kathodenseitigen als Kathodenteilraum ausgebildeten Fluidraum 34. Auch der Zudosierungsraum 32 ist mit dem porösen Material 46 gefüllt. Zudosierungsraum 32 und kathodennaher Fluidteilraum 34 sind als Keile ausgebildet und gegenläufig aufeinander angeordnet.

Der als Anodenraum ausgebildete zweite Fluidraum 14 weist keine Unterteilung durch eine Trennwand auf, ist jedoch vorteilhafterweise ebenfalls mit einem porösen Material 46 gefüllt.

Die Trennwand 36 weist entlang ihrer vom Eingangsport 24 des Oxidationsmittels ausgehenden Längserstreckung 42 eine Mehrzahl von als Bohrungen ausgebildete Zudosierungsstellen 38 auf, wie in Figur 2 anhand einer Draufsicht auf eine bevorzugte Trennwand 36 erkennbar ist. Es sind mehrere parallele Reihen von Zudosierungsstellen 38 entlang der Längserstreckung 42 der Trennwand angeordnet, wobei die Reihen senkrecht zur Längserstreckung 42 ausgebildet sind. Bei diesem Beispiel beginnen die Zudosierungsstellen 38 eingangsnah und sind auf etwa 75% der Längserstreckung 42 angeordnet. An dem Ende, das dem Eingangsport 24 entgegengesetzt ist, sind keine Zudosierungsstellen 38 vorgesehen.

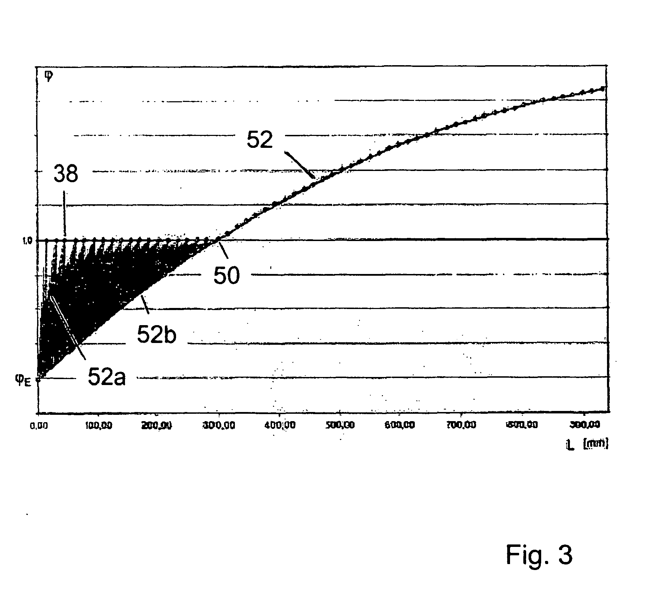

Fig. 3 zeigt den Verlauf der relativen Feuchte ϕ (52, 52a, 52b) entlang einer Längserstreckung L eines als Kathodenraum ausgebildeten Fluidraums 12 bei einer bevorzugten Ausführungsform der erfindungsgemäßen Brennstoffzelle 10.

Der Zudosierungsraum 32 ist im dargestellten Fall so ausgelegt, dass an den Zudosierungsstellen 38, von denen der Übersichtlichkeit halber stellvertretend für alle nur eine mit 38 bezeichnet ist, die Sättigung mit ϕ = 1 erreicht, aber nicht überschritten wird. Unterhalb des Sättigungspunktes 50 sind zum Vergleich zwei Äste 52a, 52b des Verlaufs der relativen Feuchte ϕ in diesem Bereich dargestellt:
Der obere Ast 52a weist einen sägezahnartigen Verlauf auf und geht am Sättigungspunkt 50 in den Verlauf 52 über. Die Verläufe 52a und 52 bilden zusammen den Verlauf der relativen Feuchte ϕ (52, 52a) in einer erfindungsgemäßen Brennstoffzelle 10.

Der untere Ast 52b zeigt zum Vergleich dazu den Verlauf der relativen Feuchte ϕ in diesem Bereich in einer herkömmlichen Brennstoffzelle. Der untere Ast 52b geht am Sättigungspunkt 50 ebenfalls in den Verlauf 52 über. Die Verläufe 52b und 52 bilden zusammen den Verlauf der relativen Feuchte ϕ (52, 52b) in einer herkömmlichen Brennstoffzelle.

Der sägezahnartige Verlauf des oberen Asts 52a der relativen Feuchte ϕ (52, 52a) in der erfindungsgemäßen Brennstoffzelle 10 erklärt sich wie folgt: das unbefeuchtete Oxidationsmittel, z.B. Umgebungsluft, tritt mit der Eintrittsfeuchte ϕ_{E} bei L = 0 mm am Eingangsport 24 in den Zudosierungsraum 32 ein. Erfindungsgemäß tritt dort allerdings nicht das ganze, für die Brennstoffzellenreaktion benötigte Volumen des Oxidationsmittels ein, sondern nur ein kleiner Teil davon. Durch das bei der Brennstoffzellenreaktion entstehende Produktwasser nimmt die relative Feuchte ϕ des Oxidationsmittels in Strömungsrichtung 40 stark zu. Der Anstieg ist im Vergleich zu herkömmlichen Brennstoffzellen deswegen besonders stark, weil die Menge an zudosiertem Oxidationsmittel geringer ist als bei herkömmlichen Brennstoffzellen, die Entstehung von Produktwasser aber in etwa gleich groß, sodass das Verhältnis der Partialdrücke von Wasserdampf zu Oxidationsmittel bei der erfindungsgemäßen Brennstoffzelle 10 größer ist als bei herkömmlichen Brennstoffzellen. Bei der in Strömungsrichtung 40 ersten Zudosierungsstelle 38, bzw. der ersten Reihe von Zudosierungsstellen 38, fällt dann die relative Feuchte ϕ abrupt ab, weil verhältnismäßig trockenes Oxidationsmittel zudosiert wird, welches das Verhältnis der Partialdrücke wieder zugunsten des Oxidationsmittels verschiebt. In Strömungsrichtung 40 danach steigt die relative Feuchte ϕ von neuem stark an, bis erneut Oxidationsmittel an der nächsten Reihe von Zudosierstellen 38 zugemischt wird usw., bis das Ende der Zudosierungsstellen 38 des Zudosierungsraums 32 erreicht ist, etwa dort, wo der Sättigungspunkt 50 erreicht ist.

Dadurch kann die relative Feuchte ϕ im Bereich des Eintritts des Oxidationsmittels in den als Kathodenraum ausgebildeten Fluidraum 12 einer erfindungsgemäßen Brennstoffzelle 10 im Vergleich zu einer herkömmlichen Brennstoffzelle so erhöht werden, dass die Gefahr der Austrocknung der Polymermembran 18 in diesem Bereich vermindert oder sogar beseitigt ist. Andererseits ist der Zudosierungsraum 32 bei der erfindungsgemäßen Brennstoffzelle 10 so ausgelegt, dass die relative Feuchte ϕ an keiner Stelle die Sättigung, d.h. ϕ = 1 übersteigt. Dadurch kann sichergestellt werden, dass in dem Bereich des Zudosierungsraums 32, der mit Zudosierungsstellen 38 versehen ist, kein flüssiges Wasser entsteht, das unter ungünstigen Umständen die Zudosierungsstellen 38 verstopfen könnte. Insgesamt kann so die relative Feuchte ϕ im Bereich des Eingangsports 24 des Oxidationsmittels in den als Kathodenraum ausgebildeten Fluidraum 12 einer erfindungsgemäßen Brennstoffzelle 10 im Vergleich zu einer herkömmlichen Brennstoffzelle erhöht werden, wobei aber keine Gefahr der Tröpfchenbildung und Verstopfung der Zudosierungsstellen 38 besteht.

## Patentansprüche

1. Brennstoffzelle mit einer zwischen zwei Separatorplatteneinheiten (44) angeordneten Membran-Elektroden-Anordnung (16), einem ersten Fluidraum (12) zur Verteilung eines ersten Fluids, der an eine Seite der Membran-Elektroden-Anordnung (16) angrenzt, einem zweiten Fluidraum (14) zur Verteilung eines zweiten Fluids, der an eine dieser Seite gegenüberliegenden Seite der Membran-Elektroden-Anordnung (16) angrenzt, wobei in wenigstens einem Fluidraum (12) eine Trennwand (36) angeordnet ist, die den Fluidraum (12) in zumindest einen Zudosierungsraum (32) und einen Fluidteilraum (34) unterteilt, wobei der zumindest eine Zudosierungsraum (32) an wenigstens einer Zudosierungsstelle (38) eine fluidische Verbindung zu dem angrenzenden Fluidteilraum (34) aufweist, sodass das erste Fluid aus dem Zudosierungsraum (32) durch die Zudosierungsstelle (38) hindurch in den angrenzenden Fluidteilraum (34) zudosierbar ist,
wobei ausgehend von einem randseitigen Eingangsport (24) des Fluids in den Fluidraum (12) ein Querschnitt des Fluidteilraums (34) in Strömungsrichtung (40) des ersten Fluids zu einem Ausgangsport (26) hin zunimmt,
**dadurch gekennzeichnet,**
**dass** anstelle einer Kanalstruktur ein poröses Material (46) zur Gasverteilung vorgesehen ist und dass der Fluidteilraum (34) zur Gasverteilung mit dem porösen Material (46) gefüllt ist.

2. Brennstoffzelle nach Anspruch 1,
**dadurch gekennzeichnet,**
**dass** ein Querschnitt des Zudosierungsraums (32) in Strömungsrichtung (40) des ersten Fluids abnimmt.

3. Brennstoffzelle nach Anspruch 1 oder 2,
**dadurch gekennzeichnet,**
**dass** die Querschnitte von Fluidteilraum (34) und Zudosierungsraum (32) insgesamt eine Separatorplatteneinheit (44) mit gleichmäßiger Dicke ergeben.

4. Brennstoffzelle nach einem der vorhergehenden Ansprüche,
**dadurch gekennzeichnet,**
**dass** der Querschnitt des Fluidteilraums (34) abhängig von einem ersten Fluidbedarf der Membran-Elektroden-Anordnung (16) und/oder abhängig von einer gewünschten relativen Feuchte des Fluids im Fluidteilraum (34) eingestellt ist.

5. Brennstoffzelle nach einem der vorhergehenden Ansprüche,
**dadurch gekennzeichnet,**
**dass** die Trennwand (36) schräg zur Membran-Elektroden-Anordnung (16) angeordnet ist.

6. Brennstoffzelle nach einem der vorhergehenden Ansprüche,
**dadurch gekennzeichnet,**
**dass** die Trennwand (36) entlang ihrer vom Eingangsport (24) des ersten Fluids ausgehenden Längserstreckung (42) eine Mehrzahl von Zudosierungsstellen (38) aufweist.

7. Brennstoffzelle nach einem der vorhergehenden Ansprüche,
**dadurch gekennzeichnet,**
**dass** die Trennwand (36) eine dünne Folie ist.

8. Brennstoffzelle nach Anspruch 7,
**dadurch gekennzeichnet,**
**dass** die Trennwand (36) metallisch ist.

9. Brennstoffzelle nach einem der vorhergehenden Ansprüche,
**dadurch gekennzeichnet,**
**dass** der Zudosierungsraum (32) mit einem porösen Material (46) gefüllt ist.

10. Brennstoffzelle nach einem der vorhergehenden Ansprüche,
**dadurch gekennzeichnet,**
**dass** das poröse Material (46) metallisch ist.

11. Brennstoffzelle nach einem der vorhergehenden Ansprüche,
**dadurch gekennzeichnet,**
**dass** der Fluidraum (12) als Kathodenraum vorgesehen ist.

12. Separatorplatteneinheit einer Brennstoffzelle (10) mit einem Kathodenraum und/oder einem Anodenraum als ersten und zweitem Fluidraum (12, 14) zur Verteilung eines ersten und zweiten Fluids, die an eine Membran-Elektroden-Anordnung (16) angrenzen, wobei in wenigstens einem Fluidraum (12) eine Trennwand (36) angeordnet ist, die den Fluidraum (12) in zumindest einen Zudosierungsraum (32) und einen Fluidteilraum (34) unterteilt und wobei der zumindest eine Zudosierungsraum (32) an wenigstens einer Zudosierungsstelle (38) eine fluidische Verbindung zu dem angrenzenden Fluidteilraum (34) aufweist, sodass ein erstes Fluid aus dem Zudosierungsraum (32) durch die Zudosierungsstelle (38) hindurch in den angrenzenden Fluidteilraum (34) zudosierbar ist, insbesondere nach einem der vorhergehenden Ansprüche,
wobei ausgehend von einem randseitigen Eingangsport (24) des ersten Fluids in den Fluidraum (12) ein Querschnitt des Fluidteilraums (34) in Strömungsrichtung (40) des ersten Fluids zu einem Ausgangsport (26) hin zunimmt, **dadurch gekennzeichnet,**
**dass** anstelle einer Kanalstruktur ein poröses elektrisch leitendes Material (46) zur Gasverteilung vorgesehen ist und dass der Fluidteilraum (34) zur Gasverteilung mit dem porösen elektrisch leitenden Material (46) gefüllt ist.

13. Separatorplatteneinheit nach Anspruch 12,
**dadurch gekennzeichnet,**
**dass** ein Querschnitt des Zudosierungsraums (32) in Strömungsrichtung (40) des ersten Fluids abnimmt.

14. Separatorplatteneinheit nach einem der Ansprüche 12 oder 13,
**dadurch gekennzeichnet,**
**dass** der Zudosierungsraum (32) mit einem porösen elektrisch leitenden Material (46) gefüllt ist.

15. Separatorplatteneinheit nach einem der Ansprüche 12 bis 14,
**dadurch gekennzeichnet,**
**dass** der Fluidraum (12) ein Kathodenraum ist.

## Claims

1. Fuel cell with a membrane electrode assembly (16) placed between two separator plate units (44), with a first fluid chamber (12) for the distribution of a first fluid, which adjoins one side of the membrane electrode assembly (16), and with a second fluid chamber (15) for the distribution of a second fluid, which adjoins an opposite side of the membrane electrode assembly (16), wherein a dividing wall (36) is provided in at least one fluid chamber (12) to divide the fluid chamber (12) into at least one metering chamber (32) and one fluid subchamber (34), wherein the at least one metering chamber (32) has at at least one metering point (38) a fluid connection to the adjoining fluid subchamber (34), so that the first fluid can be metered from the metering chamber (32) through the metering point (38) into the adjoining fluid part-chamber (34),
wherein, starting from an edge-side inlet port (24) into the fluid chamber (12) for the fluid, a cross-section of the fluid subchamber (34) increases towards an outlet port (26) in the direction of flow (40) of the first fluid,
**characterised in that**
in place of a passage structure, a porous material (46) is provided for gas distribution, and **in that** the fluid subchamber (34) is filled with the porous material (46) for gas distribution.

2. Fuel cell according to claim 1,
**characterised in that**
a cross-section of the metering chamber (32) decreases in the direction of flow (40) of the first fluid.

3. Fuel cell according to claim 1 or 2,
**characterised in that**
the cross-sections of the fluid subchamber (34) and the metering chamber (32) together provide a separator plate unit (44) of a uniform thickness.

4. Fuel cell according to any of the preceding claims,
**characterised in that**
the cross-section of the fluid subchamber (34) is adjusted in dependence on a first fluid demand of the membrane electrode assembly (16) and/or in dependence on a desired relative humidity of the fluid in the fluid subchamber (34).

5. Fuel cell according to any of the preceding claims,
**characterised in that**
the dividing wall (36) is oriented at an angle to the membrane electrode assembly (16).

6. Fuel cell according to any of the preceding claims,
**characterised in that**
the dividing wall (36) comprises a plurality of metering points (38) along its longitudinal dimension (42) starting from the inlet port (24) of the first fluid.

7. Fuel cell according to any of the preceding claims,
**characterised in that**
the dividing wall (36) is a thin foil.

8. Fuel cell according to claim 7,
**characterised in that**
the dividing wall (36) is metallic.

9. Fuel cell according to any of the preceding claims,
**characterised in that**
the metering chamber (32) is filled with a porous material (46).

10. Fuel cell according to any of the preceding claims,
**characterised in that**
the porous material (46) is metallic.

11. Fuel cell according to any of the preceding claims,
**characterised in that**
the fluid chamber (12) is designed as a cathode region.

12. Separator plate unit of a fuel cell (10) with a cathode region and/or an anode region serving as a first and/or a second fluid chamber (12, 14) for the distribution of a first and second fluid, said chambers adjoining a membrane electrode assembly (16), wherein at least one fluid chamber (12) contains a dividing wall (36) to divide the fluid chamber (12) into at least one metering chamber (32) and one fluid subchamber (34), and wherein the at least one metering chamber (32) has at at least one metering point (38) a fluid connection to the adjoining fluid subchamber (34), so that a first fluid can be metered from the metering chamber (32) through the metering point (38) into the adjoining fluid part-chamber (34), in particular according to any of the preceding claims,
wherein, starting from an edge-side inlet port (24) into the fluid chamber (12) for the fluid, a cross-section of the fluid subchamber (34) increases towards an outlet port (26) in the direction of flow (40) of the first fluid,
**characterised in that**
in place of a passage structure, a porous material (46) is provided for gas distribution, and **in that** the fluid subchamber (34) is filled with the porous, electrically conductive material (46) for gas distribution.

13. Separator plate unit according to claim 12,
**characterised in that**
a cross-section of the metering chamber (32) decreases in the direction of flow (40) of the first fluid.

14. Separator plate unit according to claim 12 or 13,
**characterised in that**
the metering chamber (32) is filled with a porous, electrically conductive material (46).

15. Separator plate unit according to any of claims 12 to 14,
**characterised in that**
the fluid chamber (12) is a cathode region.

## Revendications

1. Pile à combustible comprenant un arrangement (16) membrane-électrode disposé entre deux ensembles (44) de plaques séparatrices, un premier espace (12) à fluide pour la distribution d'un premier fluide et qui est délimité par un côté de l'arrangement (16) membrane-électrode, un deuxième espace (14) à fluide pour la distribution d'un deuxième fluide et qui est délimité par un côté de l'arrangement (16) membrane-électrode à l'opposé de ce côté, une paroi (36) de séparation étant disposée dans au moins un espace (12) à fluide, laquelle subdivise l'espace (12) à fluide en au moins un espace (32) d'apport dosé et un espace (34) à fluide partiel, ledit espace (32) d'apport dosé présentant en au moins un point (38) d'apport dosé une liaison fluidique avec l'espace (34) à fluide partiel voisin, de sorte que le premier fluide puisse être délivré de manière dosée dans l'espace (34) à fluide partiel depuis l'espace (32) d'apport dosé en traversant le point (38) d'apport dosé, une section transversale de l'espace (34) à fluide partiel augmente dans le sens (40) de l'écoulement du premier fluide entre un port (24) d'entrée côté bord du fluide dans l'espace (12) à fluide en direction d'un port (26) de sortie, **caractérisée en ce qu'**à la place d'une structure de canal est prévu un matériau (46) poreux pour la distribution du gaz et **en ce que** l'espace (34) à fluide partiel est rempli avec le matériau poreux (46).

2. Pile à combustible selon la revendication 1, **caractérisée en ce qu'**une section transversale de l'espace d'apport dosé (32) diminue dans le sens de l'écoulement (40) du premier fluide.

3. Pile à combustible selon la revendication 1 ou 2, **caractérisée en ce que** les sections transversales de l'espace (34) à fluide partiel et l'espace d'apport dosé (32) forment ensemble un ensemble de plaques séparatrices (44) de même épaisseur.

4. Pile à combustible selon l'une quelconque des revendications précédentes, **caractérisée en ce que** la section transversale de l'espace (34) à fluide partiel est réglée en fonction d'un premier besoin en fluide de l'arrangement (16) membrane-électrode et / ou en fonction d'une humidité relative souhaitée du fluide dans l'espace (34) à fluide partiel.

5. Pile à combustible selon l'une quelconque des revendications précédentes, **caractérisée en ce que** la paroi (36) de séparation est disposée en biais par rapport à l'arrangement (16) membrane-électrode.

6. Pile à combustible selon l'une quelconque des revendications précédentes, **caractérisée en ce que** la paroi (36) de séparation présente une pluralité de points (38) d'apport dosé le long de son étendue longitudinale à partir du port d'entrée (24) du premier fluide.

7. Pile à combustible selon l'une quelconque des revendications précédentes, **caractérisée en ce que** la paroi (36) de séparation est une feuille mince.

8. Pile à combustible selon la revendication 7, **caractérisé en ce que** la paroi (36) de séparation est métallique.

9. Pile à combustible selon l'une quelconque des revendications précédentes, **caractérisée en ce que** l'espace (32) d'apport dosé est rempli d'un matériau (46) poreux.

10. Pile à combustible selon l'une quelconque des revendications précédentes, **caractérisée en ce que** le matériau (46) poreux est métallique.

11. Pile à combustible selon l'une quelconque des revendications précédentes, **caractérisée en ce que** l'espace à fluide (12) est prévu en tant qu'espace cathodique.

12. Ensemble de plaques séparatrices d'une pile à combustible (10) avec un espace cathodique et / ou un espace anodique en tant que premier et second espaces à fluide (12, 14) pour la distribution d'un premier et second fluides, qui avoisinent un arrangement (16) membrane-électrode, dans au moins un espace (12) à fluide étant disposée une paroi (36) de séparation qui divise l'espace (12) à fluide en au moins un espace (32)d'apport dosé et un espace (34) à fluide partiel et l'au moins un espace (32) d'apport dosé présentant en au moins un point (38) d'apport dosé une liaison fluidique avec l'espace (34) à fluide partiel voisin, de sorte qu'un premier fluide puisse être délivré de manière dosée dans l'espace (34) à fluide partiel voisin depuis l'espace (32) d'apport dosé en traversant le point (38) d'apport dosé, en particulier selon l'une quelconque des revendications précédentes, une section transversale de l'espace (34) à fluide partiel augmentant dans le sens (40) de l'écoulement du premier fluide entre un port (24) d'entrée côté bord du premier fluide dans l'espace (12) à fluide en direction d'un port (26) de sortie, **caractérisée en ce qu'**à la place d'une structure de canal, un matériau (46) poreux électriquement conducteur est prévu pour la distribution du gaz et **en ce que** l'espace (34) à fluide partiel est rempli du matériau (46) poreux conducteur d'électricité pour la distribution du gaz.

13. Ensemble de plaques séparatrices selon la revendication 12, **caractérisé en ce qu'**une section transversale de l'espace (32) d'apport dosé diminue dans le sens de l'écoulement (40) du premier fluide.

14. Ensemble de plaques séparatrices selon l'une quelconque des revendications 12 ou 13, **caractérisé en ce que** l'espace (32) d'apport dosé est rempli d'un matériau (46) poreux électriquement conducteur.

15. Ensemble de plaques séparatrices selon l'une quelconque des revendications 12 à 14, **caractérisé en ce que** l'espace (12) à fluide est un espace cathodique.
